# EUROPEAN PATENT SPECIFICATION

(11) **EP 3 095 514 B1**
(45) Date of publication and mention of the grant of the patent: **24.01.2018**
(21) Application number: 15461572.8
(22) Date of filing: 29.10.2015
(51) Int. Cl.: B01J 20/20, B01J 20/30, C01B 32/318, C01B 32/348

(54) **METHOD OF PREPARATION OF ACTIVATED CARBON FROM FUNGI**
VERFAHREN ZUR HERSTELLUNG VON AKTIVKOHLE AUS PILZEN
PROCÉDÉ DE PRÉPARATION DE CHARBON ACTIF À PARTIR DE CHAMPIGNONS

(30) Priority: 21.05.2015 PL 41239915
(43) Date of publication of application: 23.11.2016
(73) Proprietor: Zachodniopomorski Uniwersytet Technologiczny w Szczecinie, 70-310 Szczecin (PL)
(72) Inventor: MICHALKIEWICZ, Beata, 71-244 Szczecin (PL); SERAFIN, Jaroslaw, 71-775 Szczecin (PL); MORAWSKI, Waldemar Antoni, 70-775 Szczecin (PL); NARKIEWICZ, Urszula, 70-710 Szczecin (PL); WROBEL, Rafa, 78-851 Szczecin (PL)
(74) Representative: Zawadzka, Renata

(56) References cited:
- EP-A1- 0 490 317
- JIACHENG WANG ET AL: "Fungi-based porous carbons for CO2 adsorption and separation", JOURNAL OF MATERIALS CHEMISTRY, vol. 22, no. 28, 14 June 2012 (2012-06-14) , pages 13911-13913, XP055303463, GB ISSN: 0959-9428, DOI: 10.1039/c2jm32139d
- Michael E Ostry ET AL: "Guide to Common Macrofungi in Eastern Forests and Their Ecosystem Functions - General Technical Report NRS-79", , 21 October 2011 (2011-10-21), pages 1-82, XP055303489, Retrieved from the Internet: URL:https://web.archive.org/web/2011102116 2619/http://www.fs.fed.us/nrs/pubs/gtr/gtr _nrs79.pdf [retrieved on 2016-09-16]
- WANG JIACHENG ET AL: "Chemically activated fungi-based porous carbons for hydrogen storage", CARBON, vol. 75, 13 April 2014 (2014-04-13), pages 372-380, XP028654091, ISSN: 0008-6223, DOI: 10.1016/J.CARBON.2014.04.016
- HONG XIAO ET AL: "Preparation of activated carbon from edible fungi residue by microwave assisted KCOactivationApplication in reactive black 5 adsorption from aqueous solution", BIORESOURCE TECHNOLOGY, ELSEVIER BV, GB, vol. 111, 6 February 2012 (2012-02-06), pages 127-133, XP028474396, ISSN: 0960-8524, DOI: 10.1016/J.BIORTECH.2012.02.054 [retrieved on 2012-02-18]

## Description

The purpose of the present invention is to describe a preparation method of activated carbon from fungi with a high CO₂ adsorption potential.

Activated carbon used for commercial purposes is obtained in the processes of carbonisation and activation of materials containing elemental carbon, such as coal, lignite, peat, wood and semi-coke.

There exists an extensive body of literature reports on the preparation methods of coal materials from organic raw materials. The methods are to be recommended since they are economical and sustainable. Please, find below a list of recommended review surveys: SJ .T. Pollard, G.D. Fowler, CJ. Sollar, R. Perry, Low cost adsorbent for waste and wastewater treatment: a review , Science of the Total Environment 1992, 116(1-2), 31-52*;* O. Ioannidou, A. Zabaniotou, Agricultural residues as precursors for activated carbon production-A review, Renewable and Sustainable Energy Reviews 11 (2007) 1966-2005*;* J. M. Diasa, M. C.M. Alvim-Ferraza, M. F. Almeidaa, J. Rivera-Utrillab, M. Sanchez-Polob, Waste materials for activated carbon preparation and its use in aqueous-phase treatment: A review, Journal of Environmental Management 85 (2007) 833-846*;* A. Demirbas, Agricultural based activated carbons for the removal of dyes from aqueous solutions: A review, Journal of Hazardous Materials 167 (2009) 1-9*;* R. H. Hesasa, W. M. A. Wan Dauda, J.N. Sahua, A. Arami-Niyaa, The effects of a microwave heating method on the production of activated carbon from agricultural waste: A review, Journal of Analytical and Applied Pyrolysis 100 (2013) 1-11*.*

The reports mention the use of pits, husks and straw of different plants as well as wood and cones of various trees. The polish patent application P.386878 describes activated carbon used for electrochemical storage of hydrogen and the method of its preparation. Carbon is obtained from specially prepared taqua nuts from Phytelephas macrocarpa palm trees. Nuts undergo the commonly known processes of pyrolysis, carbonisation and activation at the specific parameters being the essential feature of the invention. Carbon is characterised with an amorphous structure and is made up of a large number of individual graphene layers with a distinct hexagonal structure without fragments orientated in the form of graphite-like crystallites in the area of approximately 2 nm. Micropores in its porous structure do not have a dominant orientation of their spatial structure. Carbon is characterised with a unique ratio between micro- and mesopores, and an unusual proportion between the system of ultramicropores and micropores proper and supermicropores.

Very few papers have been published on the preparation of activated carbon from mushrooms.

Xiao et al. (H. Xiao, H. Peng, S. Deng, X. Yang, Y. Zhang, Y. Li, Preparation of activated carbon from edible fungi residue by microwave assisted K2CO3 activation-Application in reactive black 5 adsorption from aqueous solution, Bioresource Technology 111 (2012) 127-133*)* produced activated carbon from edible mushrooms, using a solution of K₂CO₃ as the activator. After drying, solid material was exposed to microwave radiation. The obtained activated carbon was an effective sorbent of reactive black 5 from aqueous solutions.

Wang et al. *(*J. Wang, I. Senkovska, S. Kaskel, Q. Liu. Chemically activated fungi-based porous carbons for hydrogen storage. Carbon 2014; 75; 380-72*)* used four types of fungi: auriculariales (*Auriculariales*), shaggy ink caps (*Coprinus comatus*), shiitake (*Lentitus edodes*) and *Agaricus* mushrooms, as substrates in the production of activated carbon. Prior to their use, dried mushrooms were soaked in warm water, rinsed with deionized water to remove all impurities and then dried at 80°C. Clean and dried mushroom samples were carbonised at the temperature of 500°C. Carbonised mushrooms were ground with solid KOH in various weight ratios and exposed to the temperature of 600-750°C. Later, they were treated with an HCl solution, distilled water and dried. Most activated carbons were characterised with the specific surface area greater than 2000 m²/g. The materials were confirmed to be good hydrogen sorbents. The maximum amount of adsorbed hydrogen was 2.4 mass %, under the pressure of 1 bar at -196°C.

Wang et al. (J. Wang, A. Heerwig, M. Lohe, M. Oschatz, L. Borchardt, S. Kaskel, Fungi-based Porous Carbons for CO2 Adsorption and Separation, J. Mater. Chem. 22 (2012), 13911-13913*)* obtained activated carbons from *Agaricus* fungi. The initial material was first charred and then ground with a solid KOH in different proportions. The mixtures were carbonised at the temperature of 700°C. The obtained activated carbons had a high specific surface area (up to 1778 m²/g). The materials were characterised with a high CO₂ adsorption (up to 5.5 mmol/g at the temperature of 0°C, under the pressure of 1 bar).

Unexpectedly, it was found that the fruiting body of arboreal fungi - polypores - can be used to produce activated carbon with a high CO₂ adsorption. Contrary to fungi described above, polypores are not edible pests to be eliminated and utilised. Interestingly, they can be a very cheap source of carbon.

The method of preparation of obtaining activated carbon from fungi when an activator or its solution is added to fungi, the mixture is dried, carbonised at a temperature of between 400 - 1000°C under an inert atmosphere, rinsed and dried is characterised in that dried polypores are mixed with an aqueous solution of the activator or that moistened polypores are mixed with the solid activator at the weight ratio of 1 : 0.1-5. KOH and/or NaOH and/or ZnCl₂ and/or Na₂CO₃ and/or K₂CO₃ are used as the activators. The mixture is left for 0 - 24 h. After cooling, the product is rinsed with distilled water to obtain neutral pH, treated with hydrochloric acid, again rinsed with distilled water to obtain neutral pH and dried.
The process is conducted under an inert atmosphere flow of 0.5 - 50 1/h. Nitrogen or any noble gas can be used at the inert gas.

The invented method enables production of activated carbon from polypores with a high specific surface area and CO₂ sorption. The essential feature of the invention is presented more in-depth in the examples below.

### Example 1

The birch polypore (*Piptoporus betulinus*) was dried at the temperature of 200 °C for 24 h. It was crushed and ground in a mortar to obtain a powder. 5g of dried and ground birch polypore (*Piptoporus betulinus*) was treated with a saturated KOH solution in the carbon: modifier mass ratio of 1:1 was left for 1 h. Then, it was dried at the temperature of 200°C for 19 h. The powdered material was soaked in a combustion tube furnace at 750°C, under nitrogen flow of 181/h. After cooling, the product was treated with distilled water to remove KOH residues and to obtain neutral pH, treated with 1 dm³/mol HCl, and rinsed again with distilled water to obtain neutral pH. The obtained product was dried at the temperature of 200°C.

The obtained activated carbon had the specific surface area of 1672 m²/g, capable of CO₂ sorption of 5.42 mmol/g, at the temperature of 0°C, under the pressure of 1 bar.

### Example 2

The procedure was the same as that in Example 1, except for the fact that the lumpy bracket (*Trametes gibbosa*) was used as the raw material. After drying, it was ground with a solid K₂CO₃ at the carbon : modifier mass ratio of 1:5. The mixture was left for 24 h and soaked in a furnace at the temperature of 1000°C, under argon flow of 1 l/h.

The obtained activated carbon had the specific surface area of 2072 m²/g, capable of CO₂ sorption of 5.7 mmol/g, at the temperature of 0°C, under the pressure of 1 bar.

### Example 3

The procedure was the same as that in Example 1, except for the fact that the lumpy bracket (*Trametes gibbosa*) was used as the raw material. After drying, it was ground with a solid NaOH at the polypore : modifier mass ratio of 1:0.1. The mixture was left for 10 h and soaked in a furnace at the temperature of 400°C, under helium flow of 0.51/h.

The obtained activated carbon had the specific surface area of 972 m²/g, capable of CO₂ sorption of 3.7 mmol/g, at the temperature of 0°C, under the pressure of 1 bar.

### Example 4

The procedure was the same as that in Example 1, except for the fact that the raw material after drying was moistened with water (5g of the material, 5 ml of water). Then, solid Na₂CO₃ and KOH were added at the polypore: Na₂CO₃ KOH mass ratio of 1:1:1.5. The mixture was left for 0 h and soaked in a furnace at the temperature of 950°C, under nitrogen flow of 501/h.

The obtained activated carbon had the specific surface area of 1972 m²/g, capable of CO₂ sorption of 4.8 mmol/g, at the temperature of 0°C, under the pressure of 1 bar.

### Example 5

The procedure was the same as that in Example 1, except for the fact that the raw material after drying was moistened with water (5g of the material, 5 ml of water). Then, solid Na₂CO₃ and KOH were added at the polypore: ZnCl₂ : KOH mass ratio of 1:3:1. The mixture was left for 15 h and soaked in a furnace at the temperature of 650°C, under argon flow of 221/h.

The obtained activated carbon had the specific surface area of 1178 m²/g, capable of CO₂ sorption of 3.3 mmol/g, at the temperature of 0°C, under the pressure of 1 bar.

### Example 6

The procedure was the same as that in Example 1, except for the fact that K₂CO₃ was used as the activator at the polypore: modifier mass ratio of 1:3.5. The mixture was left for 12 h and soaked in a furnace at the temperature of 700°C, under helium flow of 51/h. After cooling, the product was rinsed with distilled water to obtain neutral pH (no hydrochloric acid treatment was applied).

The obtained activated carbon had the specific surface area of 742 m²/g, capable of CO₂ sorption of 3.5 mmol/g, at the temperature of 0°C, under the pressure of 1 bar.

### Example 7

The procedure was the same as that in Example 1, except for the fact that the lumpy bracket (*Trametes gibbosa*) was used as the raw material. After drying, it was ground with a solid ZnCl2 at the polypore:modifier mass ratio of 1:5. The mixture was left for 24 h and soaked in a furnace at the temperature of 1000°C, under nitrogen flow of 45 l/h.
The obtained activated carbon had the specific surface area of 992 m²/g, capable of CO₂ sorption of 3.7 mmol/g, at the temperature of 0°C, under the pressure of 1 bar.

## Claims

1. A method of preparation of activated carbon from fungi, in which an activator or its solution is added to polypore fungi, the obtained mixture is dried, carbonised in an inert atmosphere, rinsed and dried, **characterised in that** the dried polypore is mixed with an aqueous solution of the activator or the moistened polypore is mixed with a solid activator at the mass ratio of 1 : 0.1-5, this mixture is then left for 0 - 24 hours, and that it is carbonised at a temperature of 400 - 1000°C, and that KOH and/or NaOH and/or ZnCl₂ and/or Na₂CO₃ and/or K₂CO₃ are used as the activators.

2. The method of preparation according to claim 1, **characterised in that** after cooling the obtained product is rinsed with distilled water to obtain neutral pH, treated with hydrochloric acid and again rinsed with distilled water to obtain neutral pH and the finally obtained activated carbon is dried.

3. The method of preparation according to claim 1, **characterised in that** an inert gas is delivered at a flow of 0.5 - 501/h.

4. The method of preparation according to claim 1, **characterised in that** nitrogen or any noble gas is used as the inert gas.

## Patentansprüche

1. Verfahren zur Herstellung von Aktivkohle aus Pilzen, **dadurch gekennzeichnet, dass** zu dem Pilzen ein Aktivator oder eine Aktivatorlösung zugesetzt, die resultierende Mischung getrocknet, unter einem chemischen Inertgas carbonisiert, gewaschen und getrocknet wird, **dadurch gekennzeichnet, dass** der getrocknete Birkenporling mit der wässrigen Aktivatorlösung gemischt oder benetzte Birkenporling wird mit einem festen Aktivator in einem Gewichtsverhältnis gemischt *1: 0,1-5,* danach die Mischung wird für einen Zeitraum von 0 bis 24 Stunden stehen gelassen und die Mischung bei 400 °C bis 1000 °C einer Carbonisierung unterzogen wird, wo als Aktivator KOH und / oder NaOH und / oder ZnCl₂ und / oder Na₂CO₃ und / oder K₂CO₃ verwendet wird.

2. Verfahren nach Anspruch 1., **dadurch gekennzeichnet, dass** das entstehende Produkt nach dem Abkühlen mit destilliertem Wasser neutral gewaschen, mit Salzsäure versetzt und erneut mit destilliertem Wasser neutral gewaschen und die resultierende Aktivkohle getrocknet wird.

3. Verfahren nach Anspruch 1, **dadurch gekennzeichnet, dass** das Inertgas zugeführt wird mit einer Geschwindigkeit von 0,5 - 50 1 / h.

4. Verfahren nach Anspruch 1, **dadurch gekennzeichnet, dass** als Inertgas Stickstoff oder ein beliebiges Edelgas verwendet wird.

## Revendications

1. Méthode de production de charbon actif en partant des champignons, basé sur l'addition aux champignons d'un activateur ou bien une solution d'activateur, le séchage du mélange obtenu, et puis une carbonisation dans l'atmosphère d'un gaz inerte, ensuite un lavage et séchage, **caractérisé en ce qu'**on mélange du polypore écailleux séché avec une solution aqueuse d'un activateur ou bien on mélange du polypore écailleux mouillé avec un activateur en état solide, en rapport pondéral 1 : 0,1-5, ensuite on laisse le mélange pour 0 - 24 heures et puis on le à une carbonisation à témperature de 400 - 1000°C, utilisant comme activateur KOH et/ou NaOH et/ou ZnCl₂ et/ou Na₂CO₃ et/ou K₂CO₃,

2. Méthode selon la revendication 1, **caractérisé en ce** ensuite après refroidissement on lave le produit obtenu avec de l'eau jusqu' à pH neutre, puis on le traite avec de l'acide chlorhydrique et ensuite on le lave encore une fois avec de l'eau distillée jusqu' à pH neutre, ensuite on sèche le carbon actif obtenu.

3. Méthode selon la revendication 1 **caractérisé en ce qu'**on fourni le gaz inerte avec une vitesse de 0,5 - 50 1/h.

4. Méthode selon la revendication 1 **caractérisé en ce qu'**en tant qu'un gaz inerte on utilise azote ou tout gaz noble.
